# FASCICULE DE BREVET EUROPEEN

(11) **EP 3 592 600 B1**
(45) Date de publication et mention de la délivrance du brevet: **06.09.2023**
(21) Numéro de dépôt: 18711389.9
(22) Date de dépôt: 21.02.2018
(51) Int. Cl.: B60N 3/06, B62D 21/15, B62D 25/08

(54) **REPOSE-PIEDS AVEC RENFORT STRUCTUREL INTEGRE**
FUSSSTÜTZE MIT INTEGRIERTER VERSTÄRKUNGSSTRUKTUR
FOOTREST WITH AN INTEGRATED STRUCTURAL REINFORCEMENT

(30) Priorité: 08.03.2017 FR 1751892
(43) Date de publication de la demande: 15.01.2020
(73) Titulaire: PSA Automobiles SA, 78300 Poissy (FR)
(72) Inventeur: PERU, Marc, 92290 Chatenay-Malabry (FR)
(86) Numéro de dépôt international: PCT/FR2018/050410
(87) Numéro de publication internationale: WO 2018/162816

(56) Documents cités:
- GB-A- 2 485 447
- JP-A- H11 310 161
- JP-U- S6 343 882
- US-A1- 2013 161 981
- US-A1- 2014 091 593

## Description

L'invention se rapporte au domaine des véhicules automobiles, notamment des véhicules électriques, et plus particulièrement à la protection des structures avant contre les chocs frontaux à faibles recouvrement de cette catégorie de véhicules. Lorsqu'un véhicule automobile subit un choc frontal sévère, cela se traduit par la déformation de la structure avant du véhicule ainsi que le déplacement d'éléments rigides, tel que le moteur, vers l'arrière de celui-ci ce qui entraîne fréquemment d'importantes intrusions au niveau du tablier et du plancher et notamment la déformation vers l'avant de la zone de réception des pieds, appelée usuellement cave à pieds.

Dans le cas spécifique de chocs frontaux à faible recouvrement contre un obstacle solide, l'intrusion au niveau de la zone de réception des pieds du conducteur est d'autant plus aggravée que les efforts sont uniquement concentrés sur le côté du véhicule au lieu d'être répartis sur une demi-largeur du véhicule.

Dans tous les cas, il résulte la plupart du temps de tous ces chocs frontaux des lésions importantes au niveau des membres inférieurs du conducteur et en particulier du pied gauche (pour les véhicules avec conduite à gauche). Celui-ci sous l'effet de tels efforts peut en effet subir une dorsoflexion qui génère alors des lésions importantes au niveau de la cheville.

Afin d'éviter ou limiter ce type de blessure, les structures avant de véhicules sont donc très souvent équipées de repose-pieds, aussi appelé cale pieds. Ces repose-pieds sont généralement implantés entre une partie du tablier et le plancher du véhicule au niveau de la zone de réception des pieds. Ainsi, en cas de choc frontal, le repose-pieds bloque l'avancée du pied dans la zone de réception des pieds et limite ainsi la flexion du pied et les risques de lésions de la cheville.

Le document US2013/161981 divulgue une structure de véhicule selon la partie caractérisante de la revendication 1.

Le document US2014091593 divulgue une structure de véhicule comportant un repose-pied situé au niveau de la zone de réception des pieds et un gousset disposé au voisinage dudit repose-pied de telle sorte que le repose-pieds soit empêché d'avancer en contactant la partie d'extrémité intérieure du gousset lors d'une collision avec un véhicule.

Le document brevet publié FR 2 820 699 divulgue un repose-pied comprenant une partie plane rigide inclinée qui est fixée dans sa partie supérieure au tablier par une liaison pivot et qui présente dans sa partie inférieure un patin. La liaison pivot est réalisée à partir d'une pliure. Sous l'effet d'un choc frontal, la pliure s'accentue et le repose-pied pivote autour de celle-ci tout en avançant vers l'habitacle du véhicule. L'inclinaison de la partie plane reste donc ainsi sensiblement constante.

Le document brevet publié WO0038947 divulgue un repose-pied avec une partie inclinée bordée d'une paroi latérale. La partie inférieure du repose-pied est maintenue au niveau du plancher par un ou plusieurs points de fixation. Lors d'un choc cette partie inférieure reste sensiblement inchangée. La partie supérieure et/ou la partie médiane du repose-pied sont quant-à-elles fixées *via* une section de déformation théorique et/ou une section de rupture théorique, sur au moins un autre point d'appui positionné sur la tôle de fond. De cette manière en cas de déformation de la zone de réception des pieds consécutive à un choc frontal, la position inclinée du repose-pied est maintenue avec déplacement correspondant du point de fixation.

Bien que ces repose-pieds présentent une meilleure résistance à la déformation que les repose-pieds en matière plastique du fait de leur structure flexible et de leur constitution métallique, ils ne présentent pas pour autant une rigidité suffisante pour être installés sur des véhicules hybrides. Ces véhicules ont en effet une masse augmentée par rapport aux véhicules thermiques, et en cas de choc frontal de la structure avant les liaisons habitacle-pied avant ont tendance à être rompues ce qui aggrave l'intrusion au niveau de la zone de réception des pieds et par conséquent le risque de lésions des membres inférieurs du conducteur.

L'invention a pour objectif de pallier au moins un des inconvénients de l'état de la technique susmentionné. Plus précisément, l'invention a pour objectif d'améliorer la résistance aux chocs frontaux à faible recouvrement des structures avant des véhicules automobiles, en particulier des véhicules électriques.

A cet effet, l'invention a pour objet une structure de véhicule automobile comprenant un plancher ; un tablier avant ; une paroi reliant le tablier avant au plancher et formant, de chaque côté du véhicule, une zone de réception des pieds d'un conducteur ou d'un passager avant ; un repose-pied disposé sur une portion de la zone de réception des pieds du conducteur, ladite portion étant située latéralement du côté extérieur du véhicule ; remarquable en ce que le repose-pied comprend une extrémité supérieure formant un épaulement en vis-à-vis d'une traverse du tablier, apte à prendre appui sur ladite traverse en cas de déformation de la structure lors d'une choc frontal.

L'épaulement à l'extrémité supérieure du repose-pied est configuré pour prendre appui sur une face inférieure et une face arrière de la traverse de tablier lors de la déformation. Le repose-pied comprend une paroi de réception du pied et deux parois latérales, de part et d'autre de la paroi de réception du pied, respectivement. La structure comprend une paroi sous la traverse de tablier, formant un passage de roue avant, chacune des deux parois latérales épousant ladite paroi. Le repose-pied comprend au moins un élément de fixation s'étendant latéralement le long de la paroi formant le passage de roue et fixé à au moins une des parois latérales dudit repose-pied. Le ou au moins un des éléments de fixation du repose-pied s'étend latéralement jusqu'au montant latéral avant et est fixé audit montant.

Avantageusement, le repose-pied est réalisé en matériau métallique tel que de l'acier, préférentiellement de l'acier à haute limite d'élasticité.

Selon un mode avantageux de l'invention, la traverse de tablier s'étend horizontalement jusqu'à un montant latéral avant de ladite structure.

Avantageusement, les parois latérales sont en acier d'une épaisseur supérieure à 1 mm et/ou inférieure à 2mm.

Selon un mode avantageux de l'invention, le repose-pied comprend, à une extrémité inférieure, une semelle s'étendant entre les deux parois latérales et en contact avec la zone de réception des pieds.

Selon un mode avantageux de l'invention, le repose-pied comprend, à l'extrémité supérieure, une patte s'étendant transversalement entre les deux parois latérales et verticalement en saillie desdites parois, en vis-à-vis de la traverse de tablier.

Selon un mode avantageux de l'invention, la traverse de tablier comprend au moins un renfoncement sur une face arrière, la patte comprenant un profil en vis-à-vis de ladite face avec un relief configuré pour engager avec ledit ou lesdits renfoncements lors de la déformation.

Les mesures de l'invention sont intéressantes en ce qu'elles permettent en cas de choc frontal à faible recouvrement de limiter la déformation de la zone de réception des pieds d'un véhicule électrique malgré une intrusion plus importante. Elles permettent donc ainsi d'assurer une meilleure protection des membres inférieurs du conducteur mais aussi du passager avant dans ce type de véhicule. Cette invention est également intéressante car elle permet de renforcer la structure avant du véhicule électrique en évitant d'installer au niveau de cette structure des renforcements classiques lourds, et en ce sens elle permet donc un allègement et ainsi au final un gain de masse.

L'invention sera mieux comprise et d'autres caractéristiques et avantages apparaîtront plus clairement à l'aide de la description qui va suivre et des dessins donnés uniquement à titre d'exemple non limitatif et parmi lesquels :
- La figure 1a est une vue en perspective d'une structure de véhicule automobile
- La figure 1b montre une vue en perspective du repose-pied de la structure de véhicule automobile de la 2. figure 1.
- La figure 2a illustre une vue en perspective du repose-pied de la structure de véhicule automobile de la figure 1, selon un premier mode de réalisation de l'invention.
- La figure 2b représente une vue en perspective du repose-pied de la structure de véhicule automobile de la figure 1, selon une variante du 2. premier mode de réalisation de l'invention.
- La figure 3 est une vue en perspective du repose-pied de la structure de véhicule automobile de la figure 1, selon un second mode de réalisation de l'invention.

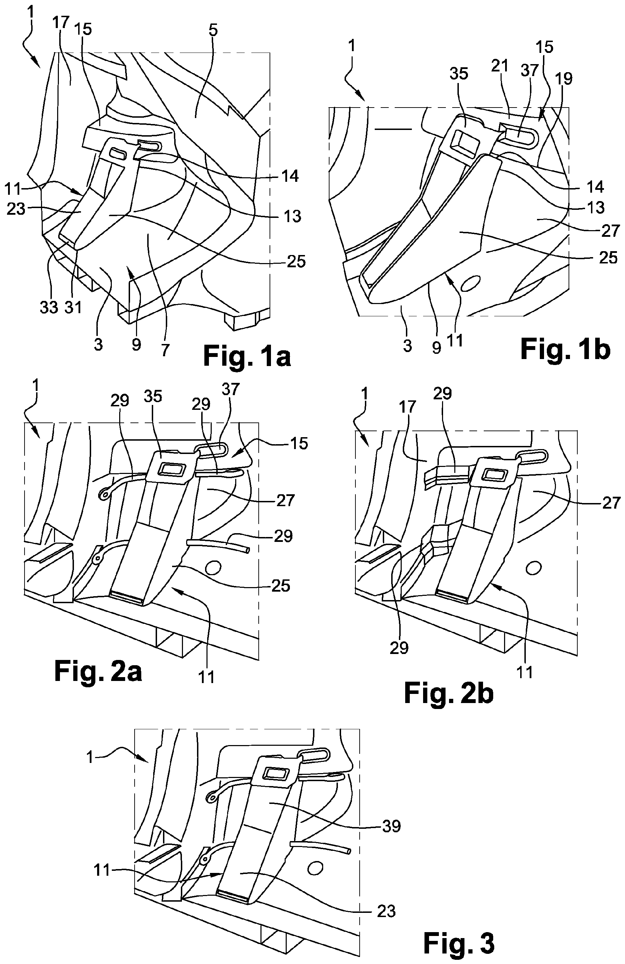

La figure 1a est une vue d'une partie de la structure 1 (avant) d'un véhicule automobile, notamment d'un véhicule hybride ou électrique, au niveau en particulier de la zone de réception des pieds 9 d'un conducteur qui se trouve classiquement sous le tableau de bord et le volant du véhicule. Cette structure 1 comprend un plancher 3, un repose-pied 11, un tablier avant 5 avec une traverse 15, et une paroi 7 qui relie le tablier 5 avant au plancher 3 et forme, de chaque côté du véhicule, la zone de réception des pieds 9.

Le repose-pied 11 est en fait disposé sur une portion de la zone de réception des pieds 9 qui est positionnée latéralement au côté extérieur du véhicule. Il est constitué d'une paroi de réception 23 du pied, en l'occurrence du pied gauche, et de deux parois latérales 25 agencées respectivement de part et d'autre de la paroi de réception 23 du pied. La partie inférieure 31 du repose-pied 11 comprend une semelle 33 en contact avec la zone de réception des pieds 9 et qui s'étend entre les deux parois latérales 25. Cette partie inférieure 31 peut également comprendre une plaque arrière (non visible sur la figure 1a) placée aussi entre les deux parois latérales 25 en contact contre la zone de réception des pieds 9, et qui constitue une plaque de fond. L'extrémité supérieure 13 du repose pieds 11 forme quant à elle un épaulement 14 en vis-à-vis d'une traverse 15 de tablier 5, en l'occurrence ici la traverse latérale 15 qui s'étend horizontalement jusqu'à un montant latéral 17 avant couramment désigné pied avant.

La figure 1b est une vue grossie et en perspective du repose-pied de la structure 1 de véhicule automobile de la figure 1a. Sur cette figure l'épaulement 14 formé par l'extrémité supérieure 13 du repose-pied 11 est clairement visible et il est possible d'observer qu'en cas de déformation de la structure 1 de véhicule automobile, cet épaulement 14 est à même de prendre appui lors de la déformation sur une face inférieure 19 et une face arrière 21 de la traverse 15 du tablier 5. Cette configuration particulière crée en fait un équerrage entre la traverse 15 du tablier 5 et la partie supérieure 13 du repose-pied 11, ce qui a pour effet de soutenir et consolider la zone du repose-pied 11 lors de la déformation. Cet équerrage utilise en fait la raideur structurelle de la traverse 15 du tablier 5 pour s'opposer à une déformation occasionnée par un choc frontal à faible recouvrement contre un obstacle rigide. En outre, la paroi 27 de la structure 1 de véhicule automobile située sous la traverse 15 de tablier 5 forme un passage de roue avant sur laquelle les deux parois latérales 25 du repose-pied 11 peuvent s'adapter (parfaitement) par arc-boutement. Il peut en être de même pour la partie des parois latérales 25 en contact contre la zone de réception des pieds 9, les arcs-boutements permettant de combler les jonctions. Il en résulte que la structure 1 du repose-pied 11 est mieux renforcée ce qui lui permet de s'opposer d'autant mieux à la verticalisation du tablier 5 en cas d'une déformation lors d'un choc frontal sévère.

Selon la figure 1b, le repose-pied 11 peut également présenter à l'extrémité supérieure une patte 35 qui s'étend transversalement entre les deux parois latérales 25 et est verticalement en saillie de celles-ci, et en vis-à-vis de la traverse 15 de tablier 5. De son côté, cette dernière 15 peut présenter un ou plusieurs renforcements 37 sur une face arrière 21, et la patte 35 du repose-pied 11 comprend un profil notamment en vis-à-vis de cette face 21 et présentant un relief configuré pour être spécifiquement engagé lors de la déformation avec un ou plusieurs des renforcements 37. Cette association patte 35 / traverse 15 de tablier 5, outre le fait de maintenir les deux parois latérales 25, participe au renforcement de l'ensemble de la structure du repose-pied 11 en s'opposant également à la verticalisation du tablier 5.

La figure 2a montre un premier mode de réalisation de la structure 1 de véhicule automobile de l'invention, dans lequel le repose-pied 11 peut comporter un ou plusieurs éléments de fixation 29. En l'occurrence sur la figure 2a ces éléments de fixation 29 sont au nombre de quatre, formés par deux tiges. Ils s'étendent latéralement le long de la paroi 27 qui forme le passage de roue et sont maintenus à au moins une des parois latérales 25 du repose-pied 11. La fixation pouvant être réalisée, par exemple, à l'aide de vis, ou de tout autre système de fixation connu de l'homme du métier.

La figure 2b illustre une variante du 2. premier mode de réalisation de l'invention. Dans cette variante, les éléments de fixation 29 du repose-pieds 11 sont des plaques qui peuvent être vissées ou soudées le long de la paroi 27 qui forme un passage de roue, ou sur le montant latéral 17 avant de la structure 1.

La figure 3 est une vue en perspective d'un second mode de réalisation de la structure 1 de véhicule automobile selon l'invention. En l'occurrence dans ce mode de réalisation, le repose-pied 11 présente une plaque de fermeture 39 plane et inclinée en prolongation de la paroi de réception 23 du pied. Cette plaque de fermeture 39 permet, si besoin est, d'apporter encore plus de résistance au repose-pied 11.

Il est à préciser que les différentes parties du repose-pied 11 sont formées par des plaques de métal, en particulier en acier haute résistance, d'épaisseur comprise entre 1 et 2mm. La semelle 33 et l'extrémité supérieure 13 qui prend appui sous la traverse 15 de tablier 5 peuvent être constituées d'un fil d'acier de 10mm de diamètre.

De manière générale, le repose-pied de la structure de véhicule automobile selon l'invention améliore la résistance des véhicules électriques en cas de choc frontal sévère, en limitant la déformation de la zone de réception de pieds. L'utilisation de la raideur de la traverse de tablier a en fait pour avantage de renforcer structurellement le repose-pied et ainsi de renforcer la structure de caisse au niveau de l'interface entre le tablier et le pied avant lors d'un choc frontal à faible recouvrement, choc qui est d'autant plus sévère sur les véhicules à masse augmentée, comme les véhicules hybrides ou électriques. La structure de véhicule automobile selon l'invention a également le double avantage, d'une part de limiter les lésions de la cheville du pied gauche du conducteur en maintenant constant l'angle pied/tibia, et d'autre part d'être plus léger et en ce sens de permettre un gain de masse en comparaison aux renforcements classiques, de type renforts de côté de caisse utilisés dans les véhicules électriques

## Revendications

1. Structure (1) de véhicule automobile comprenant :
- un plancher (3);
- un tablier avant (5);
- une paroi (7) reliant le tablier avant (5) au plancher (3) et formant, de chaque côté du véhicule, une zone de réception des pieds (9) d'un conducteur ou d'un passager avant ;
- un repose-pied (11) disposé sur une portion de la zone de réception des pieds (9) du conducteur, ladite portion étant située latéralement du côté extérieur du véhicule ;
le repose-pied (11) comprend une extrémité supérieure (13) formant un épaulement (14) en vis-à-vis d'une traverse (15) du tablier (5), apte à prendre appui sur ladite traverse (15) en cas de déformation de la structure (1) lors d'un choc frontal, l'épaulement (14) à l'extrémité supérieure (13) du repose-pied (11) étant configuré pour prendre appui sur une face inférieure (19) et une face arrière (21) de la traverse (15) de tablier (5) lors de la déformation, le repose-pied (11) comprenant une paroi de réception (23) du pied et deux parois latérales (25), respectivement de part et d'autre de la paroi de réception (23) du pied, ladite structure (1) comprenant en outre une paroi (27) sous la traverse (15) de tablier (5), formant un passage de roue avant, chacune des deux parois latérales (25) épousant ladite paroi (27), le repose-pied (11) comprenant au moins un élément de fixation (29) s'étendant latéralement le long de la paroi (27) formant le passage de roue et fixé à au moins une des parois latérales (25) dudit repose-pied (11), **caractérisée en ce que** le ou au moins un des éléments de fixation (29) du repose-pied (11) s'étend latéralement jusqu'au montant latéral (17) avant et est fixé audit montant (17).

2. Structure (1) selon la revendication 1, **caractérisée en ce que** la traverse (15) de tablier (5) s'étend horizontalement jusqu'à un montant latéral (17) avant de ladite structure (1).

3. Structure selon l'une des revendications 1 à 2, **caractérisée en ce que** le repose-pied (11) comprend, à une extrémité inférieure (31), une semelle (33) s'étendant entre les deux parois latérales (25) et en contact avec la zone de réception des pieds (9).

4. Structure (1) selon l'une des revendications 1 à 3, **caractérisée en ce que** le repose-pied (11) comprend, à l'extrémité supérieure (31), une patte (35) s'étendant transversalement entre les deux parois latérales (25) et verticalement en saillie desdites parois (25), en vis-à-vis de la traverse (15) de tablier (5).

5. Structure (1) selon la revendication 4, **caractérisée en ce que** la traverse (15) de tablier (5) comprend au moins un renfoncement (37) sur une face arrière (21), la patte (35) comprenant un profil en vis-à-vis de ladite face (21) avec un relief configuré pour engager avec ledit ou lesdits renfoncements (37) lors de la déformation.

## Patentansprüche

1. Fahrzeugstruktur (1) mit
- einem Fußboden (3);
- eine Vorderschürze (5);
- eine die Vorderschürze (5) mit dem Boden (3) verbindende Wand (7), die auf jeder Seite des Fahrzeugs einen Bereich zur Aufnahme der Füße (9) eines Fahrers oder Fahrgastes bildet;
- eine Fußstütze (11), die auf einem Teil des Fußaufnahmebereichs (9) des Fahrers angeordnet ist, wobei dieser Teil seitlich an der Außenseite des Fahrzeugs angeordnet ist;
Die Fußstütze (11) umfasst ein oberes Ende (13), das eine Schulter (14) bildet, die einem Querträger (15) der Schürze (5) gegenüberliegt und bei einer Verformung der Struktur (1) bei einem Frontalaufprall am oberen Ende (13) der Fußstütze abgestützt werden kann (11) so ausgebildet ist, dass sie sich bei der Verformung an einer Unterseite (19) und einer Rückseite (21) des Riegels (15) der Schürze (5) abstützt, wobei die Auflage (11) eine Fußaufnahmewand (23) und zwei Seitenwände (25) beiderseits der Fußaufnahmewand (23) aufweist, Struktur (1), die ferner eine Wand (27) unter dem Querträger (15) der Schürze (5) aufweist, die einen vorderen Raddurchgang bildet, wobei jede der beiden Seitenwände (25) an der Wand (27) anliegt, wobei die Fußstütze (11) mindestens ein Befestigungselement (29) aufweist, das sich seitlich entlang der Wand (27) erstreckt, die den Raddurchgang bildet, und An mindestens einer der Seitenwände (25) der Fußstütze (11) befestigt, **dadurch gekennzeichnet, dass** das oder mindestens eines der Befestigungselemente (29) der Fußstütze (11) sich seitlich bis zum vorderen Seitenholm (17) erstreckt und an dem Pfosten (17) befestigt ist.

2. Struktur (1) nach Anspruch 1, **dadurch gekennzeichnet, dass** sich der Querträger (15) der Schürze (5) horizontal bis zu einem vorderen Seitenholm (17) der Struktur (1) erstreckt.

3. Struktur nach einem der Ansprüche 1 bis 2, **dadurch gekennzeichnet, dass** die Fußstütze (11) an einem unteren Ende (31) eine Sohle (33) aufweist, die sich zwischen den beiden Seitenwänden (25) erstreckt und mit dem Fußaufnahmebereich (9) in Kontakt steht.

4. Struktur (1) nach einem der Ansprüche 1 bis 3, **dadurch gekennzeichnet, dass** die Fußstütze (11) am oberen Ende (31) eine Lasche (35) aufweist, die sich quer zwischen den beiden Seitenwänden (25) erstreckt und vertikal von den Wänden (25) gegenüber dem Querträger (15) der Schürze (5) vorsteht.

5. Struktur (1) nach Anspruch 4, **dadurch gekennzeichnet, dass** der Querträger (15) der Schürze (5) mindestens eine Vertiefung (37) auf einer Rückseite (10) (21) aufweist, wobei der Vorsprung (35) ein Profil aufweist, das der Fläche (21) gegenüberliegt, mit einer Erhebung, die so ausgebildet ist, dass sie bei der Verformung mit der Vertiefung (den) in Eingriff kommt.

## Claims

1. Motor vehicle structure (1) comprising:
- a floor (3);
- a front deck (5);
- a wall (7) connecting the front deck (5) to the floor (3) and forming, on each side of the vehicle, a foot reception area (9) of a driver or front passenger;
- a footrest (11) placed on a portion of the driver's foot reception area (9), the portion being located laterally on the outside side of the vehicle;
the footrest (11) consists of a top end (13) forming a shoulder (14) facing a cross (15) of the apron (5), capable of backing on the apron (15) if the structure is deformed (1) during a frontal shock, the shoulder (14) at the top end (13) of the rest foot (11) being configured to rely on a lower face (19) and a rear face (21) of the apron (15) cross (5) during deformation, the foot reposepied (11) comprising a front wall (23) of the foot and two side walls (25), respectively on both sides of the receiving wall (23) of the foot, said structure (1) also comprising a wall (27) under the apron cross 20 (15), forming a front wheel passage, each of the two side walls (25) embodying the said wall (27), the footrest (11) including at least one attachment element (29) extending laterally along the wall (27) forming the wall of wheel and fixed to at least one of the lateral walls (25) of the said footrest (11), **characterized by** the fact that one or more of the fastening elements (29) of the footrest (11) extends laterally to the lateral amount (17) before and is fixed to that amount (17).

2. Structure (1) according to Claim 1, characterized as the deck cross (15)-(5) extends horizontally to a lateral amount (17) before the structure (1).

3. Structure according to one of claims 1 to 2, **characterized by** the fact that the foot rest (11) includes, at a lower end (31), a sole (33) extending between the two side walls (25) and in contact with the foot reception area (9).

4. Structure (1) in accordance with one of claims 1 to 3, **characterized by** that the footrest (11) includes, at the upper end (31), a leg (35) extending horizontally between the two 5 side walls (25) and vertically protruding from the five side walls (25), in relation to the deck (15).

5. Structure (1) in accordance with Claim 4, characterized that the apron (15) crossover (5) includes at least one reinforcement (37) on a rear face 10 (21), the leg (35) includes a profile opposite that face (21) with a relief configured to engage with the said reinforcement (37) during deformation.
